# EUROPÄISCHE PATENTSCHRIFT

(11) **EP 0 878 223 B1**
(45) Veröffentlichungstag und Bekanntmachung des Hinweises auf die Patenterteilung: **10.11.2004**
(21) Anmeldenummer: 98108478.3
(22) Anmeldetag: 09.05.1998
(51) Int. Cl.: B01D 17/038, B01D 17/032

(54) **Leichtflüssigkeitsabscheider**
Separator for light liquids
Séparateur de liquides légers

(30) Priorität: 15.05.1997 DE 19720338
(43) Veröffentlichungstag der Anmeldung: 18.11.1998
(73) Patentinhaber: Ihne, Heinz, 57234 Wilnsdorf (DE)
(72) Erfinder: Ihne, Heinz, 57234 Wilnsdorf (DE)
(74) Vertreter: Selting, Günther, Dipl.-Ing.

(56) Entgegenhaltungen:
- EP-A- 0 742 036
- EP-A- 0 834 341
- FR-A- 2 567 506
- GB-A- 1 408 699
- GB-A- 2 167 689
- US-A- 2 308 670
- US-A- 3 635 342
- US-A- 3 784 009
- US-A- 4 483 774
- US-A- 5 304 303

## Beschreibung

Die Erfindung betrifft einen Leichtflüssigkeitsabscheider zum Abscheiden von Öl oder anderen Leichtflüssigkeiten von Wasser.

Ein aus DE 195 17 432 C1 bekannter Leichtflüssigkeitsabscheider weist einen Hauptströmungsweg und einen Nebenströmungsweg auf, die parallel von einer Einlaufkammer zu einem Schwerflüssigkeitsablauf führen, wobei in beiden Strömungswegen eine Leichtflüssigkeitsabscheidung erfolgt. Im Nebenströmungsweg ist eine Abdrückkammer enthalten, in die ein Überlauf der Einlaufkammer hineinführt. Schwankende Flüssigkeitspegel in der Einlaufkammer bewirken ein Abdrücken von Leichtflüssigkeit in ein aufsteigendes Abdrückrohr, von dem die Leichtflüssigkeit in einen Tank strömt. Von der Abdrückkammer führt ein Siphonrohr zum Schwerflüssigkeitsablauf. Durch dieses Siphonrohr erfolgt bei Überschreiten eines bestimmten Schwerflüssigkeitspegels in der Abdrückkammer eine stoßartige Entleerung. Der bekannte Leichtflüssigkeitsabscheider beruht ausschließlich auf dem Prinzip der Abscheidung durch Schwerkraftwirkung.

Ein Leichtflüssigkeitsabscheider, von dem der Oberbegriff des Patentanspruchs 1 ausgeht, ist beschrieben in FR-A-2 567 506. Dieser Leichtflüssigkeitsabscheider hat in einer Einlaufkammer einen Einlauftrichter. Von dem Einlauftrichter führt ein Rohr in eine als Regulator bezeichnete Zwischenkammer. Die Zwischenkammer ist mit einem Steigrohr verbunden, das als Siphon bezeichnet ist; jedoch ein Überlaufrohr darstellt, das den Schwerflüssigkeitsstand in der Zwischenkammer vorgibt. Die Zwischenkammer ist über eine. Pumpe und ein Ventil mit einer Abdrückkammer verbunden. Der Abscheider arbeitet im Intervallbetrieb, wobei auf eine Zuführphase jeweils eine Separationsphase folgt.

Der Erfindung liegt die Aufgabe zugrunde, einen Leichtflüssigkeitsabscheider zu schaffen, bei dem die Leistungsfähigkeit gegenüber der bloßen Schwerkraftabscheidung erhöht ist.

Die Lösung dieser Aufgabe erfolgt erfindungsgemäß mit den im Patentanspruch 1 angegebenen Merkmalen.

Bei dem erfindungsgemäßen Leichtflüssigkeitsabscheider besteht der Überlauf aus einem wirbelerzeugenden Einlauftrichter, in dem durch den Sog des Siphonrohres eine Rotationsbewegung der einlaufenden Flüssigkeit entsteht. In dem Siphonrohr wird während des Ablaufs der Schwerflüssigkeit eine laminare Strömung erzeugt, die einen hohen Sog in der Abdrückkammer hervorruft.

Dieser Sog überträgt sich von der Abdrückkammer auf den Einlauftrichter. Infolge dieser Sogbewegung und unterstützt durch die Corioliskraft entsteht in dem Einlauftrichter eine Art Badewannenwirbel, in dessen Zentrum sich eine Luftthrombe ausbildet. Dadurch entsteht ein hoher Sog, durch den das Leichtflüssigkeits-Schwerflüssigkeitsgemisch mit hoher Geschwindigkeit abgesaugt wird. Ferner hat der Wirbel die Wirkung, dass eine Vorabscheidung der Leichtflüssigkeit entsteht. Die Leichtflüssigkeit konzentriert sich nämlich im Zentrum des Wirbels, wobei die kleinen Tröpfchen zu größeren Tropfen koaleszieren. Diese größeren Tropfen können in der Abdrückkammer wesentlich leichter von der Schwerflüssigkeit getrennt werden als feine Emulsionströpfchen. Durch das Zusammenwirken von Siphon und Einlauftrichter wird die Abscheideleistung pro Zeit wesentlich erhöht und die Abscheidequalität wird verbessert.

In dem erfindungsgemäßen Leichtflüssigkeitsabscheider wird zusätzlich zu der Schwerkrafttrennung eine Strömung erzeugt, die durch eine dynamische Komponente zur besseren Abscheidung beiträgt. Dabei kann entsprechend dem jeweiligen Anfall an zugeführtem Flüssigkeitsgemisch der Siphon seine Entleerungsfunktion entweder in Intervallen durchführen (bei geringem Flüssigkeitsanfall) oder auch kontinuierlich (bei großem Flüssigkeitsanfall). In jedem Fall wirkt sich die bei Aktivierung des Siphons entstehende Sogwirkung wirbelbildend auf den Einlauftrichter aus.

Eine Verbesserung der Leichtflüssigkeitsabsaugung aus der Einlaufkammer ergibt sich, wenn die Innenfläche des Einlauftrichters aus oleophilem Material besteht. Hierbei wird ein Kunststoff verwendet, der in Bezug auf die abzuscheidende Leichtflüssigkeit einen Benetzungswinkel zwischen 0° und 90° aufweist. Die Adhäsionskraft erlaubt einen für Öl optimalen Benetzungszustand, wodurch ein kontinuierlicher Ölabzug über den Einlauftrichter ohne Strömungsabriß gewährleistet ist. Dies führt bei Beschickung des Abscheiders zu einem Abzug der ölbenetzten Oberflächen ohne wesentlichen Überstau des Flüssigkeitspegels und im Bereich zwischen minimalem und maximalem Flüssigkeitsstand zu einer Vergleichmäßigung der Strömung und somit zu einem turbulenzarmen Strömungsprofil.

Zweckmäßigerweise ist bei einer bevorzugten Ausführungsform zwischen dem Einlauftrichter und der Abdrückkammer ein horizontaler Rohrabschnitt vorhanden, der vorzugsweise eine Innenfläche aus oleophilem Material aufweist. In diesem horizontalen Rohrabschnitt agglomerieren mitgeführte feine Öltröpfchen, wobei sie an dem oberen inneren Rohrscheitel entlangziehen, um dann in Form größerer Tropfen in der Abdrückkammer schnell aufzusteigen.

Bei einer weiteren Ausführungsform ist das Abdrückrohr zum Abdrücken der Leichtflüssigkeit aus der Abdrückkammer innerhalb eines Fallrohrs angeordnet, das den Einlauftrichter mit der Abdrückkammer verbindet. Durch das Fallrohr wird das Flüssigkeitsgemisch in Richtung der Abdrückkammer gesogen. Durch die Sogwirkung des Siphonrohrs entsteht in dem Einlauftrichter und dem Fallrohr ein Wirbel, so daß sich die Leichtflüssigkeit an der Außenwand des Abdrückrohrs sammelt. Aufgrund des Sogs wird die Leichtflüssigkeit entlang der Außenwand des Abdrückrohres in Richtung der Abdrückkammer bewegt und bei Erreichen der Einlaßöffnung des Abdrückrohrs in dieses hineingedrückt.

Vorzugsweise ist bei dieser Ausführungsform die Außenfläche des Abdrückrohrs oleophil, um ein gleichmäßiges Strömen der Leichtflüssigkeit an der Außenfläche des Abdrückrohrs in Richtung der Abdrückkammer zu gewährleisten. Die Einlaßöffnung des Abdrückrohres ist vorzugsweise in der Einlaßöffnung der Abdrückkammer angeordnet. Dadurch wird im Bereich des Einsaugens der Leichtflüssigkeit in das Abdrückrohr die Schwerflüssigkeit zusätzlich vom Abdrückrohr wegbewegt, da sich der Durchmesser des Wirbels vergrößert. Dadurch ist das Trennen zwischen Leicht- und Schwerflüssigkeit weiter verbessert.

Bei beiden Ausführungsformen der Erfindung ist der Einlauftrichter vorzugsweise schwimmend in der Einlaufkammer gehalten, derart, daß sein Rand mit vorbestimmtem Abstand unter dem Flüssigkeitspegel bleibt. Dieser Abstand sollte nicht mehr als 20 mm betragen, da bei zu großem Überstau die Wirbelbildung unterdrückt wird. Dadurch daß der Einlauftrichter mit seinem Rand unter der Flüssigkeitsoberfläche gehalten wird, ist sichergestellt, daß ein für die Wirbelausbildung optimaler Überstand vorhanden ist.

Die Wirbelbildung im Einlauftrichter kann dadurch unterstützt werden, daß der Zulauf tangential in die Einlaufkammer mündet, so daß durch die Energie der zulaufenden Flüssigkeit bereits eine Rotation in der gesamten Einlaufkammer entsteht, die vorzugsweise in Draufsicht rund ist. Die Drehrichtung dieser tangentialen Strömung sollte mit derjenigen des durch die Corioliskraft hervorgerufenen Wirbels übereinstimmen.

Im folgenden wird unter Bezugnahme auf die Zeichnungen ein Ausführungsbeispiel der Erfindung näher erläutert.

Es zeigen:
- Fig. 1: einen schematischen Schnitt durch eine erste Ausführungsform eines Leichtflüssigkeitsabscheiders,
- Fig. 2: einen schematischen Schnitt durch eine zweite Ausführungsform eines Leichtflüssigkeitsabscheiders, und
- Fig. 3: Einzelheiten der Ausbildung und Aufhängung des Einlauftrichters.

Der Leichtflüssigkeitsabscheider weist einen Behälter 10 auf, in dem sich eine Einlaufkammer 11 befindet. In die Einlaufkammer 11 mündet ein Zulauf 12, durch den die Flüssigkeit, die aus einem Gemisch aus Leichtflüssigkeit und Schwerflüssigkeit besteht, in die Einlaufkammer geleitet wird. Der Zulauf 12 besteht aus einem Rohr, dessen Ende 13 abgebogen ist und tangential in die Einlaufkammer 11 mündet, so daß die einströmende Flüssigkeit in der runden Einlaufkammer 11 eine Rotation hervorruft.

In der Mitte der Einlaufkammer 11 befindet sich ein Einlauftrichter 14, der mit einem Fallrohr 15 verbunden ist. Von dem unteren Ende des Fallrohres 15 erstreckt sich ein horizontaler Rohrabschnitt 16 in den unteren Bereich einer Abdrückkammer 17. Die Abdrückkammer 17 hat allseitig geschlossene Seitenwände und eine Oberwand. Von der Oberwand ragt ein Abdrückrohr 18 auf, durch welches aufschwimmendes Öl hochgedrückt wird, um in einen Öltank abgeleitet zu werden.

Vom unteren Ende der Abdrückkammer 17 erstreckt sich ein Siphonrohr 19 nach oben. Das Siphonrohr 19 ist mit einem umgekehrt-U-förmigen Rohrknie 20 versehen, dessen nach unten gerichteter Auslaßschenkel 21 zu einem Schwerflüssigkeitsablauf 23 führt. An den Ablaufschenkel 21 schließt sich ein nach oben gerichteter Krümmer 24 an, der in einer Drosseldüse 25 endet. Die Höhe der Drosseldüse 25 definiert die Siphonhöhe und somit gleichzeitig dasjenige Schwerflüssigkeitsniveau 26, das sich als Ruhepegel in der Abdrückkammer 17 einstellt.

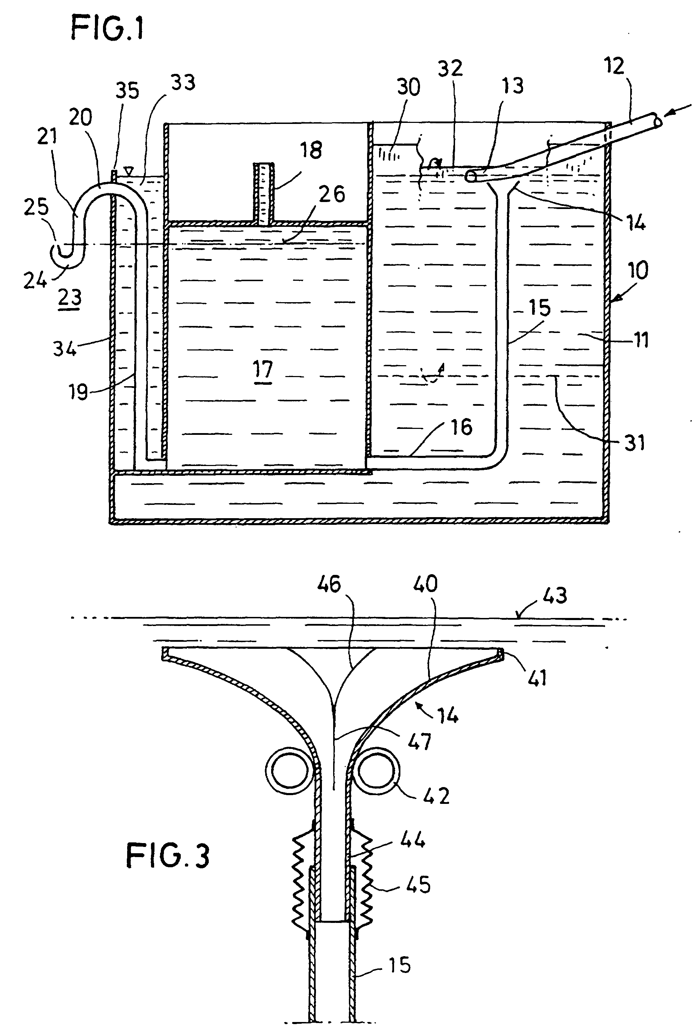

Die Einlaufkammer 11 ist ferner durch eine Tauchwand 30 begrenzt, unter deren Unterkante 31 die Schwerflüssigkeit hindurchfließen kann. Hinter dieser Tauchwand 30 befindet sich eine Kammer, in der eine Überströmwand 32 angeordnet ist. Diese Kammer führt zu einer Schwerflüssigkeitskammer 33, von der in Figur 1 nur ein Endbereich sichtbar ist. Die Behälterwand 34, die diese Schwerflüssigkeitskammer 33 begrenzt, weist eine Übertrittskante 35 auf, über die die Schwerflüssigkeit zu dem Schwerflüssigkeitsablauf 23 überfließt. Der Strömungsweg durch die Schwerflüssigkeitskammer 33 bildet den Hauptströmungsweg und der Strömungsweg durch den Einlauftrichter 14 und die Abdrückkammer 17 bildet den Nebenströmungsweg.

Die Innenflächen des Einlauftrichters 14, des Fallrohres 15, des horizontalen Rohrabschnitts 16 und des Abdrückrohres 18 bestehen aus oleophilem Material, z.B. Polyethylen, das in Bezug auf Öl einen Benetzungswinkel zwischen 0° und 90° aufweist. Dagegen besteht das Siphonrohr 19 und das Rohrknie 20 aus Edelstahl, der in Bezug auf Öl schlechte Neigungseigenschaften aufweist und daher die Trennung des in der Abdrückkammer vorhandenen Öl-Wasser-Gemisches begünstigt.

Beim Betrieb des Ölabscheiders läuft Flüssigkeitsgemisch in die Einlaufkammer 11. Wenn der Pegel die Oberkante des Einlauftrichters 14 übersteigt, fließt Öl-Wasser-Gemisch durch das Fallrohr 15 in die Abdrückkammer 17, die sich füllt, wobei in der Abdrückkammer die Leichtflüssigkeit aufschwimmt und durch das Abdrückrohr 18 herausgedrückt wird. Übersteigt die Pegelhöhe in der Einlaufkammer 11 die Höhe des Knies des Siphonrohres 19, strömt Wasser durch das Siphonrohr 19 zum Schwerflüssigkeitsauslaß 23. Durch diese schwallartige Entladung entsteht im Fallrohr 15 ein starker Sog, so daß durch den Einlauftrichter 14 Flüssigkeit nachgesaugt wird. Diese nach unten gerichtete Sogwirkung erzeugt im Einlauftrichter 14 einen Flüssigkeitswirbel. Durch die nachgelieferte Flüssigkeit bleibt der Durchfluß durch den Siphon erhalten, so daß bei genügender Nachströmung eine kontinuierliche starke Strömung durch den Siphon entsteht. Wird die Nachströmung jedoch unterbrochen, weil der Zulauf in die Einlaufkammer zu gering ist, stellt sich in der Abdrückkammer 17 die dargestellte Pegelhöhe 26 ein und der Siphonbetrieb wird unterbrochen. Der Siphon bleibt hierbei jedoch mit Wasser gefüllt.

Eine Funktion des Siphonrohres 19 ist nur dann gewährleistet, wenn das Siphonrohr über seinen gesamten Querschnitt vollständig mit Flüssigkeit gefüllt ist. Damit im Scheitelpunkt des Siphonrohres keine Luftansammlung entsteht, ist das Knie 20 des Siphonrohres 19 oval mit horizontaler Hauptachse geformt, also gewissermaßen flachgedrückt.

Durch die Rohrleitungsquerschnitte des Fallrohres 15 und des Siphonrohres 19 bzw. des Rohrknies 20 werden die strömungstechnischen Zustände in der Abdrückkammer 17 bestimmt. Maßgeblich für eine optimale Funktion der Siphonwirkung ist das Verhältnis dieser Rohrquerschnitte. Der Querschnitt des Fallrohres 15 ist mehr als doppelt so groß wie derjenige des Siphonrohres 19. Vorzugsweise beträgt der Durchmesser des Fallrohres 15 40 mm und derjenige des Siphonrohres 10 mm.

Bei gleichmäßigem Zulauf des Öl-Wasser-Gemisches wird durch die Sogwirkung des Siphonrohres 19 ein Pulsieren des Flüssigkeitsspiegels in der Einlaufkammer 11 und in der Abdrückkammer 17 hervorgerufen. Durch dieses Pulsieren in der Abdrückkammer 17 wird die Trennung des Zwei-Phasen-Gemisches positiv beeinflußt und andererseits wird Öl durch das Abdrückrohr 18 hochgedrückt. Das Ölabdrücken wird wegen der Dynamik des Pulsationsvorganges schon früher erreicht als es bei rein hydrostatischen Betrieb möglich wäre.

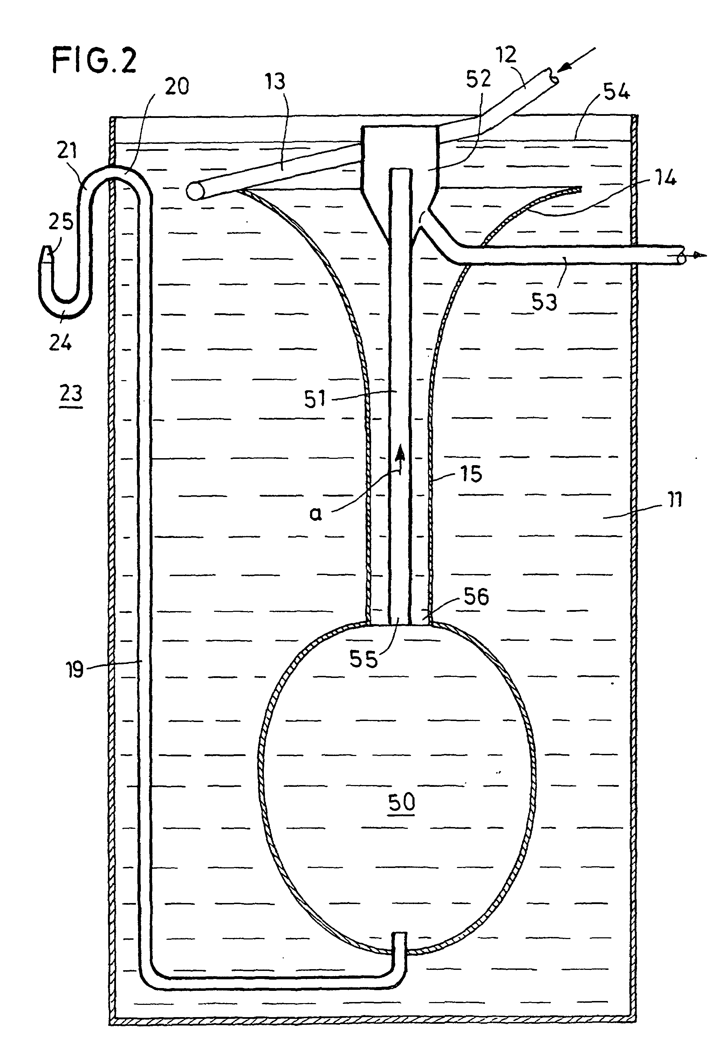

Die in Fig. 2 dargestellte Ausführungsform weist entsprechend Fig. 1 die Einlaufkammer 11 auf, in die ein Zulauf 12 mündet. Das Ende 13 des Zulaufs 12 ist ebenfalls tangential in die Einlaufkammer 11 geführt, so daß das einströmende Flüssigkeitsgemisch in der runden Einlaufkammer 11 eine Rotation hervorruft. Mit dem Einlauftrichter 14 ist ebenfalls ein Fallrohr 15 verbunden, das in eine Abdrückkammer 50 mündet. Das vertikale Fallrohr 15 mündet von oben in die kugel- oder eiförmige Abdrückkammer 50.

Das Siphonrohr 19 ist entsprechend dem in Fig. 1 dargestellten Siphonrohr 19 ausgebildet und ebenso unten an der Abdrückkammer 50 angeordnet.

Ein Abdrückrohr 51 ist konzentrisch in dem Fallrohr 15 angeordnet. Im Bereich des Einlauftrichters 14 ist mit dem Abdrückrohr 51 ein Auffangbehälter 52 verbunden. In dem Auffangbehälter 52 wird die durch das Abdrückrohr 51 abgedrückte Leichtflüssigkeit gesammelt. Das Abdrückrohr 51 ragt in den Auffangbehälter 52 hinein. An den Auffangbehälter 52 ist ein Ablaufrohr 53 angeschlossen, das unterhalb der Flüssigkeitsoberfläche 54, der in die Einlaufkammer 11 geleiteten Flüssigkeit angeordnet ist.

Die in die Einlaufkammer 11 durch den Zulauf 12 eingeleitete Flüssigkeit wird wie vorstehend beschrieben in dem Einlauftrichter 14 aufgrund der Wirkung des Siphonrohrs 19 in Rotation versetzt. Hierbei wird die Leichtflüssigkeit des Flüssigkeitsgemisches in Richtung des Abdrückrohrs 51 nach innen und die Schwerflüssigkeit nach außen bewegt. Gleichzeitig mit der Rotation in dem Fallrohr 15 wird die Flüssigkeit in Richtung der Abdrückkammer 50 gesogen. Hierbei strömt die Leichtflüssigkeit entlang der oleophilen Außenfläche des Abdrückrohrs 51 und die Schwerflüssigkeit an der Innenfläche des oleophoben Fallrohrs 15 in Richtung der Abdrückkammer 50.

Eine Einlaßöffnung 55 des Abdrückrohrs 51 ist in einer Einlaßöffnung 56 der Abdrückkammer 50 angeordnet. An der Außenfläche des Abdrückrohrs 51 nach unten strömende Leichtflüssigkeit wird somit auf Höhe der Einlaßöffnung 55 sofort in das Abdrückrohr 51 eingesogen und in Richtung des Pfeils a bewegt. Da der Durchmesser der Abdrückkammer 50 an der Einlaßöffnung 56 größer als der Durchmesser des Fallrohrs 15 ist, wird die Schwerflüssigkeit im Bereich der Einlaßöffnung 55 des Abdrückrohrs 51 von diesem wegbewegt. Dadurch kann eine annähernd vollständig von Schwerflüssigkeit getrennte Leichtflüssigkeit abgeschieden werden.

Figur 3 zeigt den Einlauftrichter 14. Dieser hat eine nach innen konvex gewölbte Trichterwand 40, die außen durch einen schmalen scharfen Rand 41 begrenzt ist. Der Trichter 40 ist mit einem Schwimmer 42 versehen, der den Rand 41 auf einer Höhe hält, die um ein vorbestimmtes Maß unter dem Flüssigkeitsspiegel 43 liegt. Diese Tauchhöhe beträgt maximal 20 mm. Auf diese Weise paßt sich die Höhe des oberen Trichterrandes der Pegelhöhe in der Einlaufkammer 11 an. Der Durchmesser des Einlauftrichters ist mindestens 4 mal, vorzugsweise mindestens 6 mal so groß wie diejenige des Fallrohres 15.

Das Auslaufrohr 44 des Trichters 14 ist teleskopisch mit dem Fallrohr 15 verbunden, so daß der Trichter 14 sich relativ zum Fallrohr 15 vertikal bewegen kann. Die Rohrverbindung ist mit einem Faltenbalg 45 abgedichtet, der zugleich als Zugfeder wirkt, welche der Auftriebskraft des Schwimmers 42 entgegenwirkt. Anstatt der teleskopischen Verbindung kann der Trichter 14 in einem Abstand zu dem Fallrohr 15 angeordnet sein, der von einem Faltenbalg überbrückt ist.

Alternativ zu dem Ausführungsbeispiel von Fig. 3, bei dem der Trichter 14 dem Flüssigkeitsspiegel in Grenzen folgt, kann der Trichter 14 auch in fester Höhe in der Einlaufkammer 11 angeordnet sein.

Bei Verwenden des Einlauftrichters 14 in der in Fig. 1 dargestellten Ausführungsform entsteht bei einem Sog im Fallrohr 15 im Einlauftrichter 14 ein rotierender Flüssigkeitswirbel, in dessen Zentrum sich eine trichterförmige Thrombe 46 ausbildet. Die leichteren Öltröpfchen sammeln sich am Rand der Thrombe 46 und werden in einem konzentrierten Strömungsfaden 47 in das Fallrohr 15 eingesaugt, wobei sie sich mit den größeren Tropfen verbinden. Daher hat der Trichter 14 auch eine Koaleszenzwirkung. Wird der Einlauftrichter bei der in Fig. 2 dargestellten Ausführungsform verwendet, sammeln sich die Öltröpfchen an der Außenfläche des Abdrückrohrs 51. Bei beiden Ausführungsformen bilden sich somit große Tröpfchen an der Innenseite des Wirbels.

## Patentansprüche

1. Leichtflüssigkeitsabscheider mit einer Einlaufkammer (11), in die ein Zulauf (12) mündet und die einen in eine Abdrückkammer (17,50) führenden Überlauf aus einem wirbelerzeugenden Einlauftrichter (14) aufweist, einem aus einem unteren Bereich der Abdrückkammer (17,50) aufwärts führenden Siphonrohr (19), das ein nach oben gebogenes Knie (20) aufweist und in einen Schwerflüssigkeitsablauf (23) mündet, und einem von der Abdrückkammer (17,50) aufragenden Abdrückrohr (18,51) zum Abführen von Leichtflüssigkeit,
**dadurch gekennzeichnet,**
**dass** das Knie (20) des Siphonrohrs (19) im Innern von einem Einlass bis zu einem Auslass gegen die Umgebung abgeschlossen ist und dass der Einlauftrichter (14) durch die Abdrückkammer (17,50) in kommunizierender Verbindung mit dem Siphonrohr (19) steht, so dass durch den Sog des Siphonrohres (19) in dem Einlauftrichter eine Rotationsbewegung der einlaufenden Flüssigkeit entsteht, wobei sich die Leichtflüssigkeit an der Innenseite des Wirbels konzentriert.

2. Leichtflüssigkeitsabscheider nach Anspruch 1, **dadurch gekennzeichnet, dass** die Innenfläche des Einlauftrichters (14) aus oleophilem Material besteht.

3. Leichtflüssigkeitsabscheider nach Anspruch 1 oder 3, **dadurch gekennzeichnet, dass** der Einlauftrichter (14) über ein Fallrohr (15) mit oleophiler Innenfläche mit der Abdrückkammer (17) verbunden ist.

4. Leichtflüssigkeitsabscheider nach einem der Ansprüche 1 bis 3, **dadurch gekennzeichnet, dass** zwischen Einlauftrichter (14) und Abdrückkammer (17) ein horizontaler Rohrabschnitt (16) vorhanden ist.

5. Leichtflüssigkeitsabscheider insbesondere nach Anspruch 1, **dadurch gekennzeichnet, daß** der Einlauftrichter (14) über ein vertikales Fallrohr (15) mit einer Abdrückkammer (50) verbunden ist und in dem Fallrohr (15) ein Abdrückrohr (51) angeordnet ist, welches oben in einem Auffangbehälter (52) mündet.

6. Leichtflüssigkeitsabscheider nach Anspruch 5, **dadurch gekennzeichnet, daß** das Abdrückrohr (51) eine oleophile Außenfläche und das Fallrohr (15) eine oleophobe Innenfläche aufweist.

7. Leichtflüssigkeitsabscheider nach Anspruch 5 oder 6, **dadurch gekennzeichnet, daß** eine Einlaßöffnung (55) des Abdrückrohrs (51) in einer Einlaßöffnung (56) der Abdrückkammer (50) angeordnet ist.

8. Leichtflüssigkeitsabscheider nach einem der Ansprüche 1-7, **dadurch gekennzeichnet, daß** der Einlauftrichter (14) schwimmend gehalten ist, derart daß sein Rand (41) mit vorbestimmtem Abstand unter dem Flüssigkeitsspiegel (43) bleibt.

9. Leichtflüssigkeitsabscheider nach einem der Ansprüche 1 bis 8, **dadurch gekennzeichnet, daß** das Knie (20) des Siphonrohres (19) oval mit horizontaler Hauptachse geformt ist.

10. Leichtflüssigkeitsabscheider nach einem der Ansprüche 1 bis 9, **dadurch gekennzeichnet, daß** der Zulauf (12) tangential in die Einlaufkammer (11) mündet, derart, daß er eine die Rotationsbewegung im Einlauftrichter (14) unterstützende rotierende Strömung erzeugt.

11. Leichtflüssigkeitsabscheider nach einem der Ansprüche 1 bis 10, **dadurch gekennzeichnet, daß** der nach unten gerichtete Auslaß des Siphonrohres (19) durch einen nach oben auslaufenden Krümmer (24) verlängert ist.

12. Leichtflüssigkeitsabscheider nach Anspruch 11, **dadurch gekennzeichnet, daß** der Krümmer (24) eine Drosseldüse (25) enthält.

## Claims

1. Separator for light liquids comprising
an inflow chamber (11) into which an inlet (12) terminates and which comprises an overflow formed by a whirl-forming inflow funnel (14) leading into a drive-out chamber (17, 50),
a siphon pipe (19) leading upward from a lower portion of the drive-out chamber (17, 50) and having an upward bent knee (20), the siphon pipe terminating in a heavy liquid drain (23), and
a drive-out pipe (18, 51) extending upward from the drive-out chamber (17, 50) for the discharge of light liquids,
**characterized in that**
the interior of the knee (20) of the siphon pipe (19) is sealed against the environment from an inlet to an outlet, and that the inflow funnel (14) is in communication with the siphon pipe (19) via the drive-but chamber (17, 50), so that the suction of the siphon pipe (19) causes a rotational movement of the inflowing liquid, whereby the light liquid is concentrated at the inside of the whirl.

2. Separator for light liquids of claim 1, wherein the inner surface of the inflow funnel (14) is made of oleophilic material.

3. Separator for light liquids of claim 1 or 2, wherein the inflow funnel (14) is connected to the drive-out chamber (17) through a downpipe (15) with an oleophilic inner surface.

4. Separator for light liquids of one of claims 1 to 3, wherein a horizontal pipe section (16) is provided between the inflow funnel (14) and the drive-out chamber (17).

5. Separator for light liquids in particular of claim 1, wherein the inflow funnel (14) is connected to a drive-out chamber (50) through a vertical downpipe (15) and wherein a drive-out pipe (51) is provided in the downpipe (15), the top of the drive-out pipe terminating in a collecting receptacle (52).

6. Separator for light liquids of claim 5, wherein the drive-out pipe (51) has oleophilic outer surface and the downpipe (15) has an oleophobic inner surface.

7. Separator for light liquids of claim 5 or 6, wherein an inlet opening (55) of the drive-out pipe (51) is arranged in an inlet opening (56) of the drive-out chamber (50).

8. Separator for light liquids of one of claims 1 to 7, wherein the inflow funnel (14) is maintained floating such that its edge (41) stays a predetermined distance below the liquid level (43).

9. Separator for light liquids of one of claims 1 to 8, wherein the knee (20) of the siphon pipe (19) is oval in shape with a horizontal main axis.

10. Separator for light liquids of one of claims 1 to 9, wherein the inflow (12) terminates tangentially into the inflow chamber (11) such that it causes a rotary flow supporting the rotational movement in the inflow funnel (14).

11. Separator for light liquids of one of claims 1 to 10, wherein the downward directed outlet of the siphon pipe (19) is extended by an upward directed bend (24).

12. Separator for light liquids of claim 12, wherein the bend (24) includes a throttling nozzle (25).

## Revendications

1. Séparateur de liquides légers comprenant une chambre d'admission (11) dans laquelle débouche une conduite d'amenée (12) et qui présente un trop-plein à partir d'une trémie d'admission (14) générant des tourbillons et conduisant dans une chambre de refoulement (17, 50), un tuyau siphon (19) conduisant depuis une zone inférieure de la chambre de refoulement (17, 50) vers le haut et présentant un coude (20) courbé vers le haut et débouchant dans une conduite d'évacuation de liquides lourds (23), et un tuyau de refoulement (18, 51) saillant de la chambre de refoulement (17, 50) vers le haut pour évacuer du liquide léger, **caractérisé en ce que** le coude (20) du tuyau siphon (19) est isolé de l'environnement à l'intérieur depuis une entrée jusqu'à une sortie, et **en ce que** la trémie d'admission (14) est en communication avec le tuyau siphon (19) par l'intermédiaire de la chambre de refoulement (17, 50), de telle sorte que dans la trémie d'admission il se produit un mouvement de rotation du liquide entrant généré par l'aspiration du tuyau siphon (19), le liquide léger se concentrant sur la surface intérieure du tourbillon.

2. Séparateur de liquides légers selon la revendication 1, **caractérisé en ce que** la surface intérieure de la trémie d'admission (14) est en matériau oléophile.

3. Séparateur de liquides légers selon la revendication 1 ou 2, **caractérisé en ce que** la trémie d'admission (14) est reliée à la chambre de refoulement (17) par un tuyau de descente (15) présentant une surface intérieure oléophile.

4. Séparateur de liquides légers selon l'une quelconque des revendications 1 à 3, **caractérisé en ce qu'**entre la trémie d'admission (14) et la chambre de refoulement (17) est située une section de tuyau horizontale (16).

5. Séparateur de liquides légers, notamment selon la revendication 1, **caractérisé en ce que** la trémie d'admission (14) est reliée à une chambre de refoulement (50) par l'intermédiaire d'un tuyau de descente vertical (15), et **en ce que** dans le tuyau de descente (15) est disposé un tuyau de refoulement (51) qui en haut débouche dans un bac de récupération (52).

6. Séparateur de liquides légers selon la revendication 5, **caractérisé en ce que** le tuyau de refoulement (51) présente une surface extérieure oléophile et le tuyau de descente une surface intérieure oléophobe.

7. Séparateur de liquides légers selon la revendication 5 ou 6, **caractérisé en ce qu'**une ouverture d'entrée (55) du tuyau de refoulement (51) est disposée dans une ouverture d'entrée (56) de la chambre de refoulement (50).

8. Séparateur de liquides légers selon l'une quelconque des revendications 1-7, **caractérisé en ce que** la trémie d'admission (14) est maintenue de manière flottante, de telle sorte que son bord (41) reste en dessous du niveau de liquide (43) à une distance prédéterminée.

9. Séparateur de liquides légers selon l'une quelconque des revendications 1 à 8, **caractérisé en ce que** le coude (20) du tuyau siphon (19) est formé de manière ovale avec un axe principal horizontal.

10. Séparateur de liquides légers selon l'une quelconque des revendications 1 à 9, **caractérisé en ce que** la conduite d'amenée (12) débouche dans la chambre d'admission (11) de manière tangentielle de telle sorte qu'elle génère un flux rotatif soutenant le mouvement de rotation dans la trémie d'admission (14).

11. Séparateur de liquides légers selon l'une quelconque des revendications 1 à 10, **caractérisé en ce que** la sortie orientée vers le bas du tuyau siphon (19) est prolongée par un raccord coudé (24) se terminant vers le haut.

12. Séparateur de liquides légers selon la revendication 11, **caractérisé en ce que** le raccord coudé (24) contient une buse d'étranglement (25).
